# EUROPEAN PATENT APPLICATION

(11) **EP 2 793 429 A1**
(43) Date of publication of application: **22.10.2014**
(21) Application number: 12865884.6
(22) Date of filing: 28.05.2012
(51) Int. Cl.: H04L 12/24

(54) **METHOD AND SYSTEM FOR MANAGING WEB FUNCTION MODULE**

(30) Priority: 19.01.2012 CN 201210017810
(71) Applicant: ZTE Corporation, Shenzhen, Guangdong 518057 (CN)
(72) Inventor: WANG, Haixin, Shenzhen Guangdong 518057 (CN)
(74) Representative: Modiano, Micaela Nadia
(86) International application number: PCT/CN2012/076160
(87) International publication number: WO 2013/107142

(57) **Abstract**

A method and a system for managing a web function module are disclosed. The method includes: configuring an office-level function module data sheet; acquiring function module data from the function module data sheet; and loading the function module data as an office function module. With the present application, the web function module is more flexibly and easily configured and expanded, different functions can be configured for different office demands according to a whole business management system, and multi-level function levels can be simultaneously configured.

## Description

### Technical Field

The present document relates to the communication management system control field, and in particular, to an extendable and flexible method and system for managing a web function module.

### Background of the Related Art

The method and system for managing a World-Wide-Web (web) function module are based on a Virtual Private Branch Exchange (vpbx) project, which is a product of an operator, and mainly combines the Virtual Private Network (vpn) and Central Exchange (centrex) related services. An important characteristic of the project is that there are many function modules, it is complex to implement a cross function, and in addition to supporting the traditional incoming and outgoing calls, it also needs to support many advanced functions such as call transfer, three-party conference, operator insertion/listen/eviction, synchronous-ringing group-calling, broadcast group-calling, conference calling and chairman appointing etc., and support functions such as short number function, public and private splitting, limitation on incoming and outgoing calls, family and friends group/united group, out-of-network number group, intelligent routing etc., wherein, the Next Generation Network (NGN) and the IP Multimedia Subsystem (IMS) network also require supporting advanced functions such as call forwarding, call transfer, call pickup, three-party conference, call waiting, call on hold, call to busy, secretary service, hotline service etc..

There are many vpbx function modules, and the demands on function modules of various operators at home and abroad differ in thousands ways. Therefore, there needs a mature extendable management way, and at the same time, when a particular operator conducts business, it also needs to perform function control well on the group functions which are served by the operator.

For the problems of a traditional system for managing a function module, first of all, the previous module systems were coupled a lot before, it generally needs to perform configuration at many locations of the interface so as to configure a function; in addition, the management on many modules is primarily allocated according to permissions of operational managers, which has a great inflexibility, and can not satisfy different demands on the offices, and has a poor extensibility at the same time.

### Summary of the Invention

The technical problem to be solved by the present document is to provide a method and system for managing a web function module, so as to enable the web function module to be more flexibly and easily configured and expanded.

In order to solve the above technical problem, the present document provides a method for managing a web function module, comprising:
configuring an office-level function module data sheet;
acquiring function module data from the function module data sheet; and
loading the function module data as an office function module.

Preferably, the above method further comprises the following feature: configuring an office-level function module data sheet comprises:
inserting or deleting one or more pieces of function module data into or from the function module data sheet; or
modifying a switch value of a corresponding function module in the function module data sheet; wherein the function module data include a number, description information and switch information of the function module.

Preferably, the above method further comprises the following feature: after loading the function module data as an office function module, the method further comprises:
acquiring a specified function module from the office function module; and
configuring a group function module according to the acquired function module.

Preferably, the above method further comprises the following feature: in the process of configuring a group function module according to the acquired function module, the method further comprises:
storing a globally unique group number and the number of the corresponding function module in a group list.

Preferably, the above method further comprises the following feature: after configuring a group function module according to the acquired function module, the method further comprises:
acquiring the group function module according to the group number; and
selecting a plurality of function modules from the group function module and configuring the plurality of function modules as group user function modules.

In order to solve the above problem, the present document further provides a system for managing a web function module, comprising:
a first configuration module, configured to configure an office-level function module data sheet;
a first acquisition module, configured to acquire function module data from the function module data sheet; and
a loading module, configured to load the function module data as an office function module.

Preferably, the above system further comprises the following feature:
the first configuration module is configured to insert or delete one or more pieces of function module data into or from the function module data sheet; or modify a switch value of a corresponding function module in the function module data sheet; wherein the function module data include a number, description information and switch information of the function module.

Preferably, the above system further comprises the following feature: the system further comprises:
a second acquisition module, configured to acquire a specified function module from the office function module; and
a second configuration module, configured to configure a group function module according to the acquired function module.

Preferably, the above system further comprises the following feature:
the second configuration module is further configured to store a globally unique group number and the number of the corresponding function module into a group list.

Preferably, the above system further comprises the following feature: the system further comprises:
a third acquisition module, configured to acquire the group function module according to the group number; and
a third configuration module, configured to select a plurality of function modules from the group function module and configure the plurality of function modules as group user function modules.

In conclusion, the embodiments of the present document provide a method and system for managing a web function module, so that the web function module is more flexibly and easily configured and expanded, different functions can be configured for different office demands according to a whole business management system, and multi-level function levels can be simultaneously configured, for example, there exist not only a system function level, but also group and user levels, and there is a strong correlation between various levels; and with the mode of dynamically configuring the function module, the plug-and-play of the function is basically implemented. Such management method and system can be generalized to any communication management system control field.

### Brief Description of Drawings

Fig. 1 is a diagram of a system for managing a web function module according to an embodiment of the present document; and
Fig. 2 is a flowchart of a method for managing a web function module according to an embodiment of the present document.

### Preferred Embodiments of the Invention

In order to make purposes, technical schemes and advantages of the present document more clear and apparent, the embodiments of the present document will be described in detail hereinafter in conjunction with accompanying drawings. It should be illustrated that, in the case of no conflict, the embodiments of this application and the features in the embodiments could be combined randomly with each other.

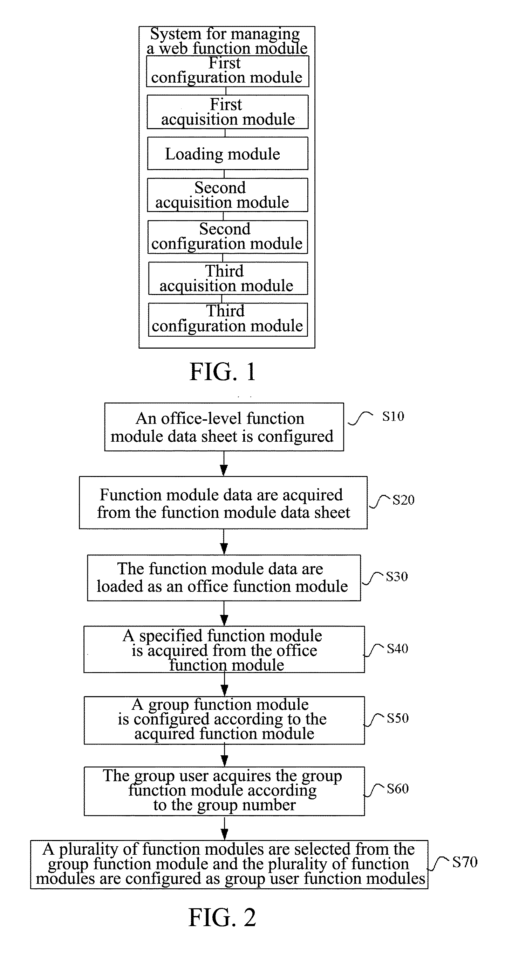

Fig. 1 is a diagram of a system for managing a web function module according to an embodiment of the present document. As shown in the figure, the system according to the present embodiment includes:
a first configuration module, configured to configure an office-level function module data sheet;
a first acquisition module, configured to acquire function module data from the function module data sheet; and
a loading module, configured to load the function module data as an office function module.

Thus, with the system according to the present embodiment, the configuration of office-level function items can be implemented by inserting data of a database, and thus a good extensibility is implemented, and a personalized office system can be configured conveniently.

Wherein, the first configuration module is specifically configured to insert or delete one or more pieces of function module data into or from the function module data sheet; or modify a switch value of a corresponding function module in the function module data sheet; wherein the function module data include a number, description information and switch information of the function module.

Wherein, the system according to the present embodiment may further comprise:
a second acquisition module, configured to acquire a specified function module from the office function module; and
a second configuration module, configured to configure a group function module according to the acquired function module.

Thus, the system according to the present embodiment can conveniently configure a personalized group can be (for example, ZTE corporation and HuaWei corporation (different corporation users) as respective groups may have different functions).

Wherein, the second configuration module may further be configured to store a globally unique group number and the number of the corresponding function module into a group list.

Modular division of different groups at the same office can be implemented well by fine division of various groups of the whole system, thus truly implementing plug-and-play of the function module in the project, and at the same time, as a single piece of data controls all functions of a particular group, it greatly saves the space of the database, and enhances the access rate of the database.

Wherein, the system according to the present embodiment may further comprise:
a third acquisition module, configured to acquire the group function module according to the group number; and
a third configuration module, configured to select a plurality of function modules from the group function module and configure the plurality of function modules as group user function modules.

The system according to the present embodiment can acquire the largest related function module on an office, and the personal and group interfaces acquire corresponding functions according to the system interface, and the functions are divided level by level. Thus, the system according to the present embodiment reduces previous correlation between various function items, and the function items can be divided into an office level (which can be controlled by scripts, for example, the JiangSu mobile office and the Beijing mobile office), a system level (which is a function permission module controlled by a related manager of an operator) and a group user level control system according to the types of the operators, which well solves the problem of the permissions of the users.

Fig. 2 is a flowchart of a method for managing a web function module according to an embodiment of the present document. As shown in the Fig. 2, the method according to the present embodiment includes the following steps.

In step S10, an office-level function module data sheet is configured;

in step S20, function module data are acquired from the function module data sheet;

in step S30, the function module data are loaded as an office function module.

Thus, the method according to the present embodiment can not only implement the configuration of office-level function items by inserting data of a database, thus implementing a good extensibility, but also can control personalized function modules of different offices, wherein, the function modules are unrelated to the permissions of the operators.

Take China Mobile as an example. The office level can be in units of provinces (of course, a certain area can also be set as an office as needed). For example, the Beijing Mobile and the Jiangsu Mobile can be different offices.

The function module data sheet of the office level is as shown in Table one. Each time a piece of data is inserted, it corresponds to one function module, and there is a corresponding switch value. That is, if the switch is off or does not exist, all functions of corresponding web and services are unavailable. In the present embodiment, the configuration of different offices can be implemented using scripts. For example, when each script corresponds to a value of 1, it illustrates that the function is available on this office, and different offices may have different function combination value.

**Table one**

| Office level function list (list name: nationafunlist) | | |
|---|---|---|
| Column name (field name) | type | description |
| funrightnum | int | number of the function module |
| funrightdes | varchar | description of the function module |
| funswitch | varchar | switch of the function module |

The function acquisition module of this part can be started by a webserver, reads related data of the office level function list (table one) (including the number, description information and switch information of the function module), and reads the data into the memory in a form of a corresponding key value pair (table two), and an effectively started function module can be configured only after dynamically loading.

**Table two**

| office level function key value pair list | | |
|---|---|---|
| number (key) of the function module | description (key value) of the function module | switch value (0 represents off, 1 represents that the funswitch is on) |
| 1 | Virtual Friend Group Function | 0 |
| 2 | On-net(off-net) transfer Function | 0 |
| 3 | On-net incoming call display Function | 0 |
| 4 | Off-net call display Function | 0 |
| ...... | ...... | 0 |
| 24 | Hunt Group Function | 0 |
| 25 | Conference Function | 0 |
| ...... | ...... | |

The method according to the present embodiment may further include the following steps.

In S40, a specified function module is acquired from the office function module; and

in S50, a group function module is configured according to the acquired function module.

Steps S40 and S50 are primarily for controlling function modules of different groups in the same office, wherein, the function modules are unrelated to the permissions of the operators.

In the present embodiment, the number and description information of the office open function can be acquired by Java Data Base Connectivity (JDBC), and are put into a function switch key value pair (switchmap) in a session. After the system is started, related switchmap information can be acquired directly on the interface, and is put into a checkbox in a form of a key value pair, and thus, an effective function module can be configured on the interface. In the function management and configuration of various group users, the value selected in the checkbox is firstly converted into a form of permission number plus delimiter, and is rewritten into the list of the database by the JDBC together with the unique identity value of the group.

In the present embodiment, all functions opened by a certain office can be managed and configured on the system interface, and the function configuration of the group may need to be managed according to the features of the user demands and the function demands of each group. As the data quantity of the group users is large, it needs to consider the access rate of the database in the process of configuration.

In the present embodiment, all group function modules can be divided into basic group functions and extended group functions, wherein, the basic functions are functions which all groups need to possess when an account is opened by the group, and the extended functions can satisfy personalized demands of various groups.

In the process of creating a group, in addition to inserting the required basic information, a list (as shown in table three) is also designed, to store a globally unique group number and a corresponding number of the function module, and when the group is created, the extension-free permission value is 0 by default;

**Table three**

| Group level function list (list name groupfunlist) | | |
|---|---|---|
| Column name (field name) | type | description |
| Id (groupid) | varchar | unique identity (group here) |
| Funlist (function list) | varchar | group function format (1,2, 3,...) |

After the group opens an account, the key value pair of the function items in the session can be read, and if a key value pair of a certain function item exists, related functions can be configured.

For example, if a poll set module of the group is to be opened, the corresponding key value of number 24 in the list (as shown in table two) must exist, and then on basis of this, the function is opened.

In addition, the present embodiment has an evident advantage, i.e., whether the extended function related to the group exists is based on the related permission number and delimiter (number + delimiter). If poll and conference functions are opened, related data stored correspond to 24 and 25, thus saving the data space well and improving the efficiency.

In addition, the method according to the present embodiment may further include the following steps.

In step S60, the group user acquires the group function module according to the group number; and
in step S70, a plurality of function modules are selected from the group function module and the plurality of function modules are configured as group user function modules.

Steps S60 and S70 are primarily for configuring function modules of a manager of a group or a personal user, wherein, the function modules are unrelated to the manager of the group, and different managers of the group may have different functions.

When the group interface and the personal interface are started, unique data corresponding to each group number will be read from a group function list (groupfunlist), and there exist related numbers of the function modules, and the read contents are put into the memory. The numbers of the function modules correspond to related function description, and the related function description can be displayed on the interface according to the numbers.

In the present embodiment, when an extension user logs in, in addition to reading some necessary extension information, it also needs to read the function list of the group, that is, configuring and reading data of a group and a related group number into a memory, parse the data delimited by a delimiter, and put them into a user list. For example, if a certain group opens a management module of a poll set, the permission of number 24 can be read from the user list, and then on basis of this, the corresponding function module can be used on the interface for the services.

The embodiment of the present document provides an effective and extendable method for managing a function module for cases that there are many function modules for the vpbx services, the function management mode is complex and excessive service functions are coupled, which enhances the availability of the service management system and improves the performance of the whole system in the case of ensuring a normal use of the service functions.

A person having ordinary skill in the art can understand that all or part of steps in the above method can be implemented by programs instructing related hardware, which can be stored in a computer readable storage medium, such as a read-only memory, a disk or a disc etc. Alternatively, all or part of steps in the above embodiments can also be implemented by one or more integrated circuits. Accordingly, each module/unit in the above embodiments can be implemented in the form of hardware, or can also be implemented in the form of software functional module. The present document is not limited to any particular form of a combination of hardware and software.

The above description is merely for the preferred embodiments of the present document. Of course, the present document can have a plurality of other embodiments. Without departing from the spirit and substance of the present document, those skilled in the art can make various corresponding changes and variations according to the present document, and all these corresponding changes and variations should belong to the protection scope of the appended claims in the present document.

### Industrial Applicability

The embodiments of the present document provide a method and system for managing a web function module, so that the web function module is more flexibly and easily configured and expanded, different functions can be configured for different office demands according to a whole business management system, and multi-level function levels can be simultaneously configured, for example, there exist not only a system function level, but also group and user levels, and there is a strong correlation between various levels; and with the mode of dynamically configuring the function module, the plug-and-play of the function is basically implemented. Such management method and system can be generalized to any communication management system control field.

## Claims

1. A method for managing a web function module, comprising:
configuring an office-level function module data sheet;
acquiring function module data from the function module data sheet; and
loading the function module data as an office function module.

2. The method according to claim 1, wherein, configuring an office-level function module data sheet comprises:
inserting or deleting one or more pieces of function module data into or from the function module data sheet; or
modifying a switch value of a corresponding function module in the function module data sheet;
wherein the function module data include a number, description information and switch information of the function module.

3. The method according to claim 1 or 2, wherein, after loading the function module data as an office function module, the method further comprises:
acquiring a specified function module from the office function module; and
configuring a group function module according to the acquired function module.

4. The method according to claim 3, wherein, during the process of configuring a group function module according to the acquired function module, the method further comprises:
storing a globally unique group number and the number of the corresponding function module into a group list.

5. The method according to claim 4, wherein, after configuring a group function module according to the acquired function module, the method further comprises:
acquiring the group function module according to the group number; and
selecting a plurality of function modules from the group function module and configuring the plurality of function modules as group user function modules.

6. A system for managing a web function module, comprising:
a first configuration module, configured to configure an office-level function module data sheet;
a first acquisition module, configured to acquire function module data from the function module data sheet; and
a loading module, configured to load the function module data as an office function module.

7. The system according to claim 6, wherein,
the first configuration module is configured to insert or delete one or more pieces of function module data into or from the function module data sheet; or modify a switch value of a corresponding function module in the function module data sheet; wherein the function module data include a number, description information and switch information of the function module.

8. The system according to claim 6 or 7, further comprising:
a second acquisition module, configured to acquire a specified function module from the office function module; and
a second configuration module, configured to configure a group function module according to the acquired function module.

9. The system according to claim 8, wherein,
the second configuration module is further configured to store a globally unique group number and the number of the corresponding function module into a group list.

10. The system according to claim 9, further comprising:
a third acquisition module, configured to acquire the group function module according to the group number; and
a third configuration module, configured to select a plurality of function modules from the group function module and configure the plurality of function modules as group user function modules.
